# EUROPÄISCHE PATENTSCHRIFT

(11) **EP 0 998 196 B1**
(45) Veröffentlichungstag und Bekanntmachung des Hinweises auf die Patenterteilung: **29.09.2004**
(21) Anmeldenummer: 98932160.9
(22) Anmeldetag: 17.06.1998
(51) Int. Cl.: A01N 25/18, A01N 53/00

(54) **INSEKTIZID-ENTHALTENDE FORMULIERUNGEN**
FORMULATIONS CONTAINING AN INSECTICIDE
FORMULATIONS CONTENANT UN INSECTICIDE

(30) Priorität: 30.06.1997 DE 19727776; 16.04.1998 DE 19816781
(43) Veröffentlichungstag der Anmeldung: 10.05.2000
(73) Patentinhaber: S.C.Johnson & Son, Inc., Racine, WI 53403-2236 (US)
(72) Erfinder: BUBLITZ, Mike-Dirk, D-51399 Burscheid (DE); DUJARDIN, Ralf, Novi, MI 48374 (US); MIELKE, Burkhard, D-51515 Kürten (DE); KISTERS, Dietmar, D-47809 Krefeld (DE)
(74) Vertreter: Ruschke, Hans Edvard, Dipl.-Ing.
(86) Internationale Anmeldenummer: PCT/EP1998/003652
(87) Internationale Veröffentlichungsnummer: WO 1999/001030

(56) Entgegenhaltungen:
- EP-A- 0 636 314
- DE-A- 19 605 581
- FR-A- 2 378 448
- DATABASE WPI Derwent Publications Ltd., London, GB; AN 93-121206 XP002083025 FUMAKILA KK: "Thermal Vaporiser for insecticides, deodorants etc.- made of partially sintered thermoplastic polymer resin e.g. polyacetal or polycarbonate " & JP 05 058806 A

## Beschreibung

Die Erfindung betrifft ein Insektizid enthaltende Formulierungen, ein Verfahren zu ihrer Herstellung und ihre Verwendung zum Bekämpfen von Insekten.

Systeme zur Bekämpfung von Insekten auf Basis von Heizgeräten werden immer beliebter. Sie beruhen auf dem Prinzip, dass geeignete Materialien wie Zellstoff oder Baumwollkarton, Asbest oder Keramik mit einem insektiziden Wirkstoff imprägniert werden. Diese mit dem Insektizid getränkten Trägermaterialien können dann zu Formkörpern beliebiger Art, vorzugsweise Plättchen (nachfolgend als "Verdampferplättchen" bezeichnet), geschnitten werden, die bei erhöhter Temperatur den Wirkstoff abgeben.

Die Insektizide werden unter dem Einfluss eines Heizgerätes verflüchtigt, das eine Temperatur von 105 -190 °C erzeugt. Ein ähnliches Prinzip liegt dem Gelverdampfer zugrunde, bei dem das Insektizid einer Gelformulierung einverleibt ist.

Aus DE-A-196 05 581 sind insektizide Formulierungen auf Basis von Polymeren bekannt, die das Insektizid (den Wirkstoff) bei erhöhter Temperatur abgeben. Als mögliche Wirkstoffe werden darin verschiedene Pyrethroide genannt. Obgleich diese Formulierungen vielen Anforderungen der Praxis genügen, besteht ein Bedarf nach weiteren Verbesserungen, insbesondere ist eine längere Wirkungsdauer der insektiziden Formulierungen erwünscht, damit der Verbraucher die Formkörper seltener wechseln muß.

Bei einer längeren Wirkungsdauer der Formulierungen müssen die darin enthaltenen Materialien, Wirkstoffe und Polymeren aber auch den damit verbundenen Temperaturbelastungen standhalten können. Außerdem müssen die Polymeren einen höheren Anteil an Wirkstoff aufnehmen können, ohne daß dieser bei Raumtemperatur in unerwünschter Weise ausschwitzt.

Aufgabe der Erfindung war daher die Bereitstellung von ein Insektizid als Wirkstoff enthaltenden Formulierungen mit einer gleichmäßigen Wirkstoffabgabe-Charakteristik und einer möglichst langen Wirkungsdauer bei ihrer Verwendung zur Bekämpfung von Insekten bei erhöhten Temperaturen, z.B. in so genannten Verdampferplättchen, die mittels eines Heizgerätes auf eine Temperatur von 105 bis 190 °C erhitzt werden.

Es wurde nun gefunden, daß diese Aufgabe erfindungsgemäß dadurch gelöst wird, dass in einer ein Insektizid enthaltenden Formulierung ein pyrethroides Insektizid zusammen mit einem bestimmten Polymer, nämlich Poly-4-methyl-1-penten, neben einem oder mehreren Zuschlagsstoffen als Wirkstoffträger verwendet wird.

In EP-A-636 314 sind zwar ebenfalls ein Insektizid enthaltende Formulierungen beschrieben, die ein Pyrethroid als Wirkstoff neben Polymeren und anorganischen Zusätzen (wie Glasfasern) enthalten, die Verwendung von Poly-4-methyl-1-penten ist aus dieser Druckschrift jedoch nicht zu entnehmen und durch die darin enthaltenen Lehren auch nicht nahegelegt. In Database WIPI Derwent-Publications Ltd., AN 93-121 206, in Verbindung mit JP 05-058 806 A sind verdampfbare Insektizide und damit kombinierte Polymere beschrieben sind, Pyrethroide und das Polymer Poly-4-methyl-1-penten sind darin jedoch weder genannt noch durch die daraus zu entnehmenden Lehren nahegelegt.

Gegenstand der Erfindung ist eine ein Insektizid enthaltende Formulierung, die umfasst
A) ein oder mehrere pyrethroide Insektizide, die bei erhöhter Temperatur abgegeben werden,
B) Poly-4-methyl-1-penten, gegebenenfalls im Gemisch mit anderen Poly-α-Olefinen, mit einem Erweichungspunkt zwischen 100 und 300 °C, vorzugsweise zwischen 150 und 250 °C, insbesondere zwischen 150 und 200 °C, und
C) einen oder mehrere Zuschlagsstoffe.

Außerdem können in der Formulierung weitere Zusätze enthalten sein, wie z.B. Stabilisatoren, Farbstoffe oder Duftstoffe sowie übliche organische oder anorganische Hilfsstoffe.

Als pyrethroide Wirkstoffe werden bevorzugt verwendet:
1) 3-Allyl-2-methyl-cyclopent-2-en-4-on-1-yl-d/l-cis/trans-chrysanthemat (Allethrin/Pynamin®),
2) 3-Allyl-2-methyl-cyclopent-2-en-4-on-1-yl-d-cis/trans-chrysanthemat (Pynamin forte®),
3) 3-Allyl-2-methyl-cyclopent-2-en-4-on-1-yl-d-trans-chrysanthemat (Bioallethrin®),
4) 2,3,5,6-Tetrafluorobenzyl-(+)-1R-trans-2,2-dimethyl-3-(2,2-dichlorovinyl)-cyclopropancarboxylat (Transfluthrin, Bayothrin®)
5) (S)-3-Propargyl-2-methyl-cyclopent-2-en-4-on-1-yl-(1 R)-cis/transchrysanthemat (Prallethrin / Etoc),
oder Mischungen dieser Wirkstoffe.

Besonders bevorzugt ist eine Formulierung, die als pyrethroides Insektizid enthält 3-Allyl-2-methyl-cyclopent-2-en-4-on-1-yl-d/l-cis/trans-chrysanthemat (Allethrin/Pynamin®),
3-Allyl-2-methyl-cyclopent-2-en-4-on-1-yl-d-cis/trans-chrysanthemat (Pynamin forte®),
3-Allyl-2-methyl-cyclopent-2-en-4-on-1-yl-d-trans-chrysanthemat (Bioallethrin®),
2,3,5,6-Tetratluorobenzyl-(+)-1 R-trans-2,2-dimethyl-3-(2,2-dichlorovinyl)-cyclopropancarboxylat (Transfluthrin, Bayothrin®)
oder Mischungen davon.

Besonders bevorzugte insektizide Wirkstoffe sind 3-Allyl-2-methyl-cyclopent-2-en-4-on-1-yl-d-cis/trans-chrysanthemat (Pynamin forte®) und 2,3,5,6-Tetrafluorobenzyl-(+)-1 R-trans-2,2-dimethyl-3-(2,2-dichlorovinyl)-cyclopropancarboxylat (Transfluthrin, Bayothrin®), wobei die zuletzt genannte Verbindung (Transfluthrin, Bayothrin®) ganz besonders bevorzugt ist.

Als polymere Materialien, die gegebenenfalls zusätzlich zu Poly-4-methyl-1-penten verwendet werden können, werden vorzugsweise amorphe und teilkristalline Polymere sowie Mischungen aus beiden verwendet, die sich thermoplastisch, d.h. als zähflüssige Schmelze, verarbeiten lassen und deren Erweichungsbereich unterhalb des Siedepunktes der einzuarbeitenden insektiziden Wirkstoffe unter Normaldruck liegt. Die Polymeren werden für den entsprechenden Wirkstoff so ausgewählt, daß sich der Wirkstoff zumindest teilweise mit den Polymeren mischt. Der Erweichungsbereich wird bei amorphen thermoplastischen Polymeren anhand der Glasumwandlungstemperatur und bei teilkristallinen Polymeren anhand der Schmelztemperatur bestimmt.

Beispiele für bevorzugte geeignete (Co)Polymere sind:
PVC (weich), Polystyrol, Styrol/Butadien, Styrol/Acrylnitril, Acrylnitril/Butadien/Styrol, Polymethylacrylat, amorphe Polycycloolefine, Celluloseester, aromatische Polycarbonate, amorphe aromatische Polyamide, Polyphenylenether, Poly(ether)-sulfone, Polyimide, Polyethylen, Polypropylen, Polybutylen, Polymethylpenten, PVC (hart), Polyamid, Polyetheramide, Polyesteramide, Polyoxymethylen. Polyethylenterephthalat, Polybutylenterephthalat, Polyimid, Polyether(ether)keton und Polyurethane.

Bevorzugt sind beispielsweise die folgenden Mischungen:
Blends aus Polycarbonaten mit Polybutylenterephthalat, Blends aus Polyamid-6 und Styrol/Acrylnitril, Blends aus Polypropylen und Polymethylpenten, wobei Polypropylen besonders bevorzugt ist.

Gemäß einer bevorzugten Ausgestaltung der Erfindung enthält die ein Insektizid enthaltende Formulierung zusätzlich zu Poly-4-methyl-1-penten ein oder mehrere andere Poly-α-olefine aus der Gruppe der Polyethylene, Polypropylene, Polybutene und Polyisobutene sowie der Copolymerisate der den genannten Polymeren zugrunde liegenden α-Olefine.

Gemäß einer weiteren bevorzugten Ausgestaltung der Erfindung kann in der ein Insektizid enthaltenden Formulierung das Poly-4-methyl-penten bis zur Hälfte seines Gewichtes durch ein anderes Pofy-α-olefin ersetzt sein.

Eine besonders bevorzugte, ein Insektizid enthaltende Formulierung enthält
A) 0,1 bis 80 Gew.-% Transfluthrin,
B) 99,9 bis 20 Gew.-% Pofy-4-methyl-1-penten, das bis zur Hälfte seines Gewichtes durch ein andere Poly-α-olefin ersetzt sein kann,
wobei sich die Prozentangaben jeweils auf die Summe der Komponenten A + B beziehen.

Gemäß einem weiteren Gegenstand betrifft die vorliegende Erfindung ein Verfahren zur Herstellung der vorstehend angegebenen Formulierungen, bei dem die Komponenten miteinander gemischt werden und die erhaltene Mischung geformt wird.

Außerdem betrifft die vorliegende Erfindung die Verwendung der vorstehend beschriebenen, ein Insektizid enthaltenden Formulierung zur Bekämpfung von Insekten.

Ein besonders bevorzugter Gegenstand der Erfindung sind Formulierungen, die enthalten
A. 0,2 bis 40, insbesondere 0,5 bis 20, speziell 1 bis 12 Gew.-% Transfluthrin 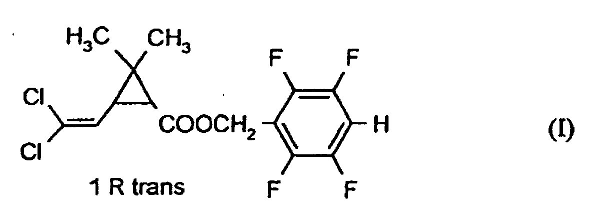 und
B. 99,8 bis 60, insbesondere 99,5 bis 80, speziell 99 bis 88 Gew.-% Poly-4-methyl-1-penten, das seinerseits bis zur Hälfte, vorzugsweise bis zu einem Drittel, insbesondere bis zu einem Viertel seines Gewichts durch ein anderes Poly-α-olefin ersetzt sein kann,
wobei sich die Prozentangaben jeweils auf die Summe der Komponenten A + B beziehen.

Transfluthrin und ein Verfahren zu seiner Herstellung sind aus der DE-A-37 05 224 (= EP-B-279 325) bekannt.

Poly-4-methyl-1-penten ist ein Polymerisat, vorzugsweise mit einer Glasübergangstemperatur von 50 bis 60 °C, einer Erweichungstemperatur, gemessen nach Vicat (ASTM D 1525), von 140 bis 180, vorzugsweise 170 bis 175 °C, und einem Schmelzindex (260°C/5 kg), gemessen nach ASTM D 1238, von 20 bis 200, vorzugsweise 22 bis 35 [g/10 min], das bekanntlich durch Polymerisation von 4-Methyl-1-penten hergestellt werden kann.

Als "andere" Poly-α-olefine, die das Poly-4-methyl-1-penten teilweise ersetzen können, kommen hauptsächlich Polyethylene, Polypropylene, Polybutene und Polyisobutene sowie Copolymerisate der den genannten Polymerisaten zugrundeliegenden α-Olefine, wie z.B. EthylenlPropylen-Copolymerisate, in Frage. Bevorzugte Polypropylene umfassen iso- und/oder syndiotaktische Polypropylene, vorzugsweise mit einer Erweichungstemperatur, gemessen nach Vicat (ISO 306), von 130 bis 170, vorzugsweise 140 bis 160 °C und einem -Schmelzindex (230°C/2 kg), gemessen nach ISO 1133, von 20 bis 40, vorzugsweise 25 bis 35 [gl10 min].

Sofern "andere" Poly-α-olefine mitverwendet werden, kann das Gewichtsverhältnis Poly-4-methyl-1-penten/Poly-α-olefine 70:30 bis 99:1, vorzugsweise 80:20 bis 95:5 betragen.

Die erfindungsgemäßen Formulierungen enthalten neben den Komponenten A und B als Komponente C ein oder mehre Zuschlagstoffe, insbesondere organische und/oder anorganische Zusätze, wie z.B. Füllstoffe, Farbstoffe, Stabilisatoren, Duftstoffe.

Die erfindungsgemäßen Formulierungen können mit Hilfe von Antioxidantien stabilisiert werden, indem man einen UV-Absorber als Additiv der Formulierung beimischt. Als UV-Absorber können alle bekannten UV-Absorber eingesetzt werden.

Bevorzugt eingesetzt werden Phenolderivate, wie z.B. Butylhydroxytoluol (BHT), Butylhydroxyanisol (BHA), Bisphenolderivate, Arylamine, wie z.B. Phenyl-α-naphthylamin, Phenyl-β-naphthylamin, ein Kondensat aus Phenetidin und Aceton o.ä. oder Benzophenone.

Es können Farbstoffe, wie anorganische Pigmente, z.B. Eisenoxid, Titanoxid, Ferrocyanblau und Farbstoffe, wie z.B. Alizarin, Azo- und und MetallphthalocyaninFarbstoffe verwendet werden.

Als synthetische Duftstoffe können den erfindungsgemäßen Formulierungen zugefügt werden:
Pinen, Limonen und ähnliche Kohlenwasserstoffe; 3,3,5-Trimethylcyclohexanol, Linalool, Geraniol, Nerol, Citronellol, Menthol, Bomeol, Bomeylmethoxy-cyclo hexanol, Benzylalkohol, Anisatkohol, Zimtalkohol, β-Phenylethylalkohol, cis-3-Hexanol, Terpineol und ähnliche Alkohole; Anethote, Moschusxylol, Isoeugenol, Methyteugenol und ähnliche Phenole; α-Amylzimtaldehyd, Anisaldehyd, n-Butyraldehyd, Cuminaldehyd, Cyclamenaldehyd, Decylaldehyd, Isobutyraldehyd, Hexylaldehyd, Heptylaldehyd, n-Nonylaldehyd, Nonadienol, Citral, Citronellal, Hydroxy citronellal, Benzaldehyd, Methylnonylacetaldehyd, Zimtaldehyd, Dodecanol, α-Hexylzimtaldehyd, Undecanal, Heliotropin, Vanillin, Ethylvanillin, und ähnliche Aldehyde, Methylamylketon, Methyl-β-naphtylketon, Methylnonylketon, Moschusketon, Diacetyl, Acetylpropionyl, Acetylbutyryl, Carvon, Methon, Campher, Acetophenon, p-Methylacetophenon, Jonon, Methyljonon und ähnliche Ketone; Amyl-butyrolacton, Diphenyloxid, Methylphenylglycidat, Nonylaceton, Cumarin, Cineol, Ethytmethylphenylglycidat und ähnliche Lactone bzw. Oxide, Methylformiat, lsopropytformiat, Linatylformiat, Ethylacetat, Octylacetat, Methylacetat, Benzylacetat, Cinnamylacetat, Butylpropionat, Isoamylacetat, Isopropylisobutyrat, Geranylisovalerat, Allylcapronat, Butytheptylat, Octytcarprylat, Methylheptincarboxylat, Methyloctincarboxylat, Iso amylcarprylat, Methyllaurat, Ethylrriyristat, Methylmyristat, Ethylbenzoat, Benzylbenzoat, Methylcarbinylphenylacetat, Isobutytphenylacetat, Methylcinnamat, Styracin, Methylsalicylat, Ethytanisat, Methylanthranilat, Ethylpyruvat, Ethyl-α-butylbutyrat, Benzylpropionat, Butylacetat, Butylbutyrat, p-tert-Butylcyclohexylacetat, Decylacetat, Citronellylacetat, Citronellylformiat, p-Cresytacetat, Ethylbutyrat, Ethylcaproat, Ethylcinnamat, Ethytphenylacetat, Ethylenbrassylat, Geranylacetat, Geranylformiat, Isoamylsalicylat, lsoamylvalerat, Isobomylacetat, Linalylacetat, Methyl anthranilat, Methyldihydrojasmonat, Nonylacetat, β-Phenylethylacetat, Trichlormethylenphenylcarbinylacetat, Terpinylacetat, Vetiverylacetat und ähnliche Ester.

Die Formulierungen enthalten im allgemeinen zwischen 0,1 und 80, vorzugsweise zwischen 0,2 und 40, besonders bevorzugt zwischen 1,0 und 20 Gew.-% Wirkstoff.

Als Zuschlagstoffe können Modifizierungsmittel und/oder Füll- und Verstärkungsstoffe und/oder Verarbeitungshilfsmittel verwendet werden, wie beispielsweise Nukleierungshilfsmittel, Weichmacher, Entformungsmittel, Flammschutzmittel, Schlagzähmodifikatoren, Stabilisatoren, oder sonst im Thermoplastbereich übliche Zusatzmittel. Vorzugsweise werden Füllstoffe verwendet, wie in "Encyclopedia of Polymer Science and Engineering, Bd. 7, Seiten 53-73 (1985), beschrieben.

Als Füll- und Verstärkungsstoffe können Mineralien wie beispielsweise Gips, Kalk, Glasfasern oder Sand, vorzugsweise Glasfasern, verwendet werden.

Die Menge der Zuschlagstoffe kann innerhalb weiter Grenzen schwanken; im allgemeinen beträgt sie 1 bis 80, vorzugsweise 0,2 bis 50 und insbesondere 0,5 bis 30 Gew.-%, bezogen auf die erfindungsgemäße Formulierung.

Die erfindungsgemäßen Formulierungen können hergestellt werden, indem die Komponente B als Granulat oder Pulver in einen geeigneten Kneter oder Extruder eingebracht und plastifiziert wird. Unter den für die Komponente B typischen Plastifizierbedingungen und -temperaturen kann die Komponente A (der Wirkstoff) über eine geeignete Dosiervorrichtung direkt in die Polymerschmelze eingebracht und gleichmäßig verteilt werden.

Die Plastifizierung der Komponente B (Polymerisate) kann in Knetem (Banbury, Wemer & Pfleiderer) einschließlich Spezialknetem sowie in variablen Scherwalzenextrudem und in Ein- und Doppelwellenextrudern erfolgen.

Scherwalzenextruder dienen hauptsächlich für Batch-Produktionen, während mit Ein- bzw. Zweiwellen-Extrudem oder Buss-KO-Knetem die Einarbeitung des Wirkstoffs kontinuierlich durchgeführt werden kann. Geeignete Extruder oder Kneter für die Einarbeitung des Wirkstoffs basieren auf dem Prinzip der Friktion; die Reibungswärme entsteht bei der horizontalen Vorwärts- und Rückwärtsbewegung der Wellen. Die Wellen können sich in Bezug auf Gangtiefe, Gangbreite, Steigungwinkel in Rotationsrichtung je nach Polymerisat/WirkstoffMischung unterscheiden. Die Qualität der Homogenisierung kann durch die Knetzeit und das Länge/Durchmesser-Verhältnis der Extruderwellen eingestellt werden.

Um homogene Produkte für die thermoplastische Verarbeitung zu Formmassen zu erhalten, empfiehlt sich eine Dosierung in folgender Form: Die Zugabe des Polymerisats erfolgt vorzugsweise in Granulat- oder Pulverform.

Der Wirkstoff kann fest oder flüssig (als Schmelze oder Lösung) entsprechend der erforderlichen Genauigkeit mit Hilfe von volumetrischen oder gravimetrischen Dosiergeräten zugesetzt werden. Volumetrische Dosiergeräte umfassen Schnecken-, Zellrad-, Drehteller- und Schwingrinnendosierer. Gravimetrische Dosiereinrichtungen sind z.B. Dosierbandwaagen oder Differentialdosierwaagen. Für gut rieselnde Polymerisatgranulate (Korngröße >50 µm) werden als Dosiereinrichtungen gerne Vibrationsrinnen, Spiral- oder Blattschnecken und Bänder eingesetzt. Wirkstoff mit Pulvergrößen zwischen 10 und 50 µm kann wie eine Flüssigkeit behandelt und vorzugsweise mit "Kammersystemen" wie Zeliradschleusen oder Doppelschnecken zudosiert werden. Der Wirkstoff kann in der Füllzone des Extruders oder weiter stromanwärts in einer oder mehreren Stufen zugegeben werden. Die Dosierung erfolgt vorzugsweise in die Polymerisatschmelze, um die Bildung von Sekundäragglomeraten zu vermeiden.

Ein flüssiger Wirkstoff kann z.B. der Vormischung zugegeben (Heiz-/Kühlmischer) werden. Ein wachsartiger Wirkstoff kann zuerst bei 60 bis 80°C aufgeschmolzen und in einem temperierten Vorratsgefäß gelagert werden, bevor er dem Extruder zugeführt wird. Ein flüssiger Wirkstoff kann mit Zahnradpumpen, Schraubspindelpumpen oder Einfach- bzw. Mehrfachkolbenpumpen zudosiert werden. Er wird dem Extruder vorzugsweise an einer Stelle zugeführt, wo die Schmelze unter Druck steht. Der Schmelzendruck soll über dem Dampfdruck des Wirkstoffes bei der jeweiligen Schmelzetemperatur liegen, da ansonsten Dampf und Schaum entstehen. An der Einspritzstelle sollte der Druck in Richtung Schneckenspitze fallen, d.h. der Druckgradient negativ sein, damit der zugeführte Wirkstoff nicht stromaufwärts "abgepreßt" wird. Bei größeren Wirkstoffmengen und großen Viskositätsunterschieden zwischen Polymerisat und flüssigem Wirkstoff ist es vorteilhaft, die Flüssigkeit gleichzeitig an mehreren Stellen einzuspritzen. Bei thermisch empfindlichen Wirkstoffen kann dadurch die Verteilung des Wirkstoffes in der Schmelze rascher erreicht werden. Wichtig ist, daß flüssiger Wirkstoff möglichst direkt in die Schmelze-eingebettet und nicht nur am Rand der Zylinderinnenwand eingespritzt wird. Filmbildung niedrigviskoser Flüssigkeiten an der Zylinderwand kann durch Verringerung der Dosierung vermieden werden; andernfalls kann sich die Förderung verschlechtern bzw. bei Einschnekken-Extrudem sogar zusammenbrechen. In diesem Fall können Einspritzventile verwendet werden, die in den Schneckenkanal hineinragen. An der Einspritzstelle ist der Schneckensteg dann unterbrochen. Es sollte unbedingt vermieden werden, daß beim Abstellen der Dosierpumpe Polymerisatschmelze in das Einspritzventil und in die Zuführleitung eindringt, dort fest wird und die Flüssigkeitszufuhr beim Wiedereinschalten der Dosierpumpe blockiert. Um diesen Effekt zu vermeiden, kann man federbelastete Spezialrückschlagventile einsetzen, bei denen die Rückstromsperre direkt an der Auslaßöffnung liegt.

Für flüssigen Wirkstoff gilt hinsichtlich des Einmischprozesses prinzipiell dasselbe wie für festen Wirkstoff. Da die zudosierten Flüssigkeiten in den meisten Fällen deutlich niedrigviskoser als die Pofymerisatschmelze sind, entfällt jedoch beim Homogenisieren das Problem ihrer Zerteilung. Sie müssen im wesentlichen nur verteilt werden. Dazu eignen sich Mischringe, da diese ein vielfach abwechselndes Aufteilen und Ausstreichen der einzelnen Schichten bewirken. Gleiche Mischgüte kann auch durch statische Mischelemente erreicht werden, die zwischen Förderschnecke und Ausformwerkzeug installiert werden.

Die Dosierung flüssigen oder festen Wirkstoffes kann auch in Form von Wirkstof konzentraten erfolgen. Bei den Konzentraten handelt es sich um Zwischenprodukte, die Wirkstoff in einer hohen Konzentration in Trägersubstanzen eingebettet enthalten. Trägersubstanz kann dabei das Polymerisat B oder ein mit dem Polymerisat B nicht mischbares Material sein (Polymer, Füllstoff). Bei der Endverwendung wird durch Zumischen von weiterem Polymerisatgranulat auf die gewünschte niedrige Konzentration zurückverdünnt. Der in solcher Form hochkonzentrierte Wirkstoff hat die Aufgabe, gut dosierbares Wirkstofkonzentrat für unterschiedlich einstellbare Konzentrationen zu sein. Meistens liegen diese "Masterbatches" in Granulatform vor.

Die Wirkstoff enthaltenden Polymerisate können auf verschiedene Arten granuliert werden. Entweder schneidet man z.B. extrudierte und ganz oder teilweise abgekühlte Stränge (Stranggranulation) oder aber man schneidet die heiße Schmelze direkt beim Austritt aus der Düse vor dem Kopf (z.B. Wasserringgranulation).

Die hergestellten wirkstoffhaltigen Granulate können thermoplastisch zu Formteilen weiterverarbeitet oder mit weiterem Polymerisat zu Mischungen verarbeitet werden (Masterbatch).

Zur Formgebung können die üblichen bei Kunststoffen anzuwendenden Verfahren, wie z.B. Spritzgußverarbeitung, Extrusionsblasen, Folienextrusion oder Tiefziehen, verwendet werden.

Ein weiterer Gegenstand der Erfindung ist also ein Verfahren zur Herstellung der erfindungsgemäßen Formulierungen durch Mischen der Komponenten und Formen der erhaltenen Mischung.

Die erfindungsgemäßen Formulierungen können in Form von Verdampferplättchen in konventionellen Verdampfergeräten, wie sie z.B. für Cellulose-Verdampferplättchen, verwendet werden, zum Einsatz kommen. Arbeitstemperaturen von 60 bis 180, vorzugsweise 130 bis 170°C gewährleisten eine lang anhaltende, relativ gleichmäßige Wirkstoffabgabe an die Umgebung.

Ein weiterer Gegenstand der Erfindung ist die Verwendung der erfindungsgemäßen Formulierungen zur Bekämpfung von Insekten, wie z.B. Fliegen und Mücken.

Die Prozentangaben der die Erfindung enäutemden nachfolgenden Beispiele beziehen sich jeweils auf das Gewicht.

### Beispiele

### Verwendete Ausgangsmaterialien:

1. Poly-4-methyl-1-penten der Firma Mitsui (Polymethylpenten TPX RT 18)
2. Polypropylen (Hostalen PPV 2080, PPV 2700 L, PPV 2780 L der Firma Hoechst AG)
3. Titandioxid (Bayer Titan RFK-2 der Firma Bayer AG)

### Beispiel 1

### Compoundierung von Wirkstoffen in verschiedene Polymere

Compoundiert wurde auf einem Zweiwellen-Meßextruder (Extrudertyp: 35/17 D, Extruderkühlung: Luft, Einzugskühlung: Wasser, 3 mm-Rundstrangdüse, vier elektrisch beheizte Heizzonen).

Das Polymergranulat dosiert man bei der jeweiligen Temperatur über eine Waage in den Extruder. Der Wirkstoff wird in einem mit Wasserdampf beheizten Vorratsbehälter erwärmt und über eine Zahnradpumpe zugepumpt. Der Durchsatz wird auf insgesamt 6 kg/h eingestellt.

Der austretende Polymerstrang wird im Wasserbad abgekühlt und dann im Granulator zerkleinert. Das Granulat trocknet man bei ca. 50°C im Wasserstrahlvakuum.

| **Beispiel** | **Polymer** | **Wirkstoff** | **Heizzonen-Temp. [°C]** | | | | **Düse** | **Drehmoment** | **Druck** | **Drehzahl** |
|---|---|---|---|---|---|---|---|---|---|---|
| | | % | **1** | **2** | **3** | **4** | [mm] | [Nm] | [bar] | [l/min] |
| **1.1.** | TPX RT 18 | 3,4 | 270 | 280 | 280 | 280 | 3,0 | 16 | 12 | 60 |
| **1.2.** | TPX RT 18 | 2,0 | 270 | 280 | 280 | 280 | 3,0 | 18 | 16 | 60 |
| **1.3.** | TPX RT 18 | 1,0 | 270 | 280 | 280 | 280 | 3,0 | 19 | 15 | 60 |
| **1.4.** | TPX RT 18 | 1,5 | 270 | 280 | 280 | 280 | 3,0 | 19 | 16 | 60 |
| **1.5**. | TPX RT 18 /Glasfaser | 0,95 | 270 | 270 | 270 | 270 | 3,0 | 27 | 23 | 40 |
| **1.6.** | TPX RT 18 / Glasfaser | 1,35 | 270 | 270 | 270 | 270 | 3,0 | 27 | 23 | 40 |
| **1.7.** | PP/ Glasfaser | 4.0 | 240 | 250 | 250 | 250 | 3,0 | 26 | 21 | 60 |
| **1.8.** | PP/Mineral | 4,0 | 240 | 250 | 250 | 250 | 3,0 | 23-24 | 17 | 60 |
| **1.9.** | PP/Mineral | 4,0 | 180 | 190 | 190 | 190 | 3,0 | 18 | 19 | 60 |
| * TPX RT 18 Polymethylpenten | | | | | | | | | | |
| * PP Hostalen PPV 2080 | | | | | | | | | | |
| Nr. 1.9. Hostalen PPV 2700 L | | | | | | | | | | |

### Beispiel 2

### Vergleich mit und ohne Zuschlagsstoffe

Die ausgewogenen Testkörper werden auf die vorgesehenen Heizer mittig aufgelegt und nach Anschalten des Heizgerätes alle 2 h genau ausgewogen. Die Tests werden so lange durchgeführt, bis die vorausberechnete Anwendungszeit von 10 h erreicht ist.

Heizgerät: Baygon Mückenfrei Heizgerät, Standard Deutschland, mit
Festwiderstand, 155°C.
Prüfkörper: 34 x 22 x 2,5 mm
Zyklus: 2 - 10 h

| **Beispiel Nr.** | **Material** | **Wirkstoff** | **Herst.-Beispiel** | **Gewichtsverlust in mg** | | | | |
|---|---|---|---|---|---|---|---|---|
| | | | | **2 h** | **4 h** | **6 h** | **8 h** | **10 h** |
| **2.1.** | Polymethylpenten (PTX) | 34 x 22 x 2,5 | | 33,5 | 47,5 | 52,0 | 59,0 | 63,0 |
| **2.2.** | Polymethylpenten/ 20 % Glasfaser | 34 x 22 x 2,5 | | 23,9 | 45,7 | 56,6 | 63,9 | 70,4 |

Der Vergleich Polymenthylpenten mit und ohne Zusatz von 20 % Glasfaser zeigt die deutliche Steigerung der abgedampften Menge.

### Beispiel 3

### Vergleich mit verschiedenen Dimensionierungen

Die ausgewogenen Testkörper werden auf die vorgesehenen Heizer mittig aufgelegt und nach Anschalten des Heizgerätes alle 2 h genau ausgewogen. Die Tests werden so lange durchgeführt, bis die vorausberechnete Anwendungszeit des Prüfkörpers von 10 h erreicht ist.
Heizgeräte:
Baygon Mückenfrei Heizgerät, Standard Deutschland, mit Festwiderstand, 155°C (Beispiele 3.1 und 3.2.).
Baygon Eletrico Heizer Brasilien mit PTC-Widerstand, 155°C (Beispiele 3.3 und 3.4.)
Wirkstoff: Transfluthrin (1,3 %)
   Zyklus: 2 - 10 h

| **Beispiel Nr.** | **Material** | **Dimension mm** | **Herst.-Beispiel** | **Gewichtsverlust in %** | | | | |
|---|---|---|---|---|---|---|---|---|
| | | | | **2 h** | **4 h** | **6 h** | **8 h** | **10 h** |
| **3.1.** | Polymethylpenten | 34 x 22 x 2,5 | | 33,5 | 47,5 | 52,0 | 59,0 | 63,0 |
| **3.2.** | Polymethylpenten/ 20 % Glasfaser | 34 x 22 x 2,5 | | 23,9 | 45,7 | 56,6 | 63,9 | 70,4 |
| **3.3.** | Polymethylpenten | 40 x 18 x 2,5 | | 23,5 | 30 | 34 | 38 | 43 |
| **3.4.** | Polymethylpenten/ 20 % Glasfaser | 40 x 18 x 2,5 | | 20,0 | 36,1 | 42,0 | 45,2 | 46,1 |

Der Zusatz von 20 % Glasfaser führt auch in diesem Beispiel zu einer Verbesserung des Abdampfverhaltens. Dieser Effekt ist beim Brasilien-Format 40 mm x 18 mm x 2,5 mm stärker ausgeprägt als beim Format 34 mm x 22 mm x 2,5 mm.

### Beispiel 4

### Vergleich mit unterschiedlichen Wirkstoffgehalten

Die ausgewogenen Testkörper werden auf die vorgesehenen Heizer mittig aufgelegt und nach Anschalten des Heizgerätes alle 2 h genau ausgewogen. Die Tests werden so lange durchgeführt, bis die vorausberechnete Anwendungszeit des Prüfkörpers von 10 h erreicht ist.
Heizgeräte: Baygon Mückenfrei Heizgerät, Standard Deutschland, mit Festwiderstand, 155°C.
Prüfkörper: 34 x 22 x 2,5 mm
Zyklus: 2 - 10 h

| **Beispiel Nr.** | **Material** | **Wirkstoff** | **Herst.-Beispiel** | **relativer Gewichtsverlust in %, (Gesamtgehalt** = **100 %)** | | | | |
|---|---|---|---|---|---|---|---|---|
| | | | | **2 h** | **4 h** | **6 h** | **8 h** | **10 h** |
| **4.1.** | Polymethylpenten/ 20 % Glasfaser | 0,95 % Transfluthrin | | 28,4 | 37,5 | 47,5 | 50,6 | 55,0 |
| **4.2.** | Polymethylpenten/ 20 % Glasfaser | 1,3 % Transfluthrin | | 23,9 | 45,7 | 56,6 | 63,9 | 70,4 |

Erhöhung der Wirkstoffkonzentration führt zu höheren Abgaberaten und damit verbunden zu verminderten Restgehalten.

### Beispiel 5

### Zuschlagsstoffe in Polypropylen (100°C Version)

Die ausgewogenen Testkörper werden auf die vorgesehenen Heizer mittig aufgelegt und nach Anschalten des Heizgerätes nach jeweils 10 h genau ausgewogen. Die Tests werden so lange durchgeführt, bis die vorausberechnete Anwendungszeit des Prüfkörpers von 70 - 80 h erreicht ist.
Temperatur: 115°C
DBK Heizgerät GD Typ mit PTC.
Prüfkörper: 6,25 cm²
Zyklus: 1 x 10h /Tag.
Dauer: 7 Tage

| **Beispiel Nr** | **Wirkstoffmenge (mg)** | **Polymer** | **Dicke mm** | **10 h mg/h** | **20 h mg/h** | **40 h mg/h** | **60 h mg/h** | **70 h mg/h** | **Gesamtabgabe (%)** |
|---|---|---|---|---|---|---|---|---|---|
| **5.1.** | 47 | PP ohne Zusätze | 2 | 1,26 | 0,61 | 0,34 | 0,26 | 0,26 | 80 |
| **5.2.** | 50 | PP+ Glasfaser | 2 | 1,72 | 0,73 | 0,37 | 0,26 | 0,26 | 90 |

### Beispiel 6

### Herstellung der Verdampferplättchen

Die Formgebung erfolgt durch Spritzguß auf einer Maschine Arburg 320 - 210 - 850, Einwellenschnecke mit Durchmesser 35 mm, Schneckenfüllung ca. 125 g (entspricht fünf Schuß) bei einem umgekehrten Temperaturprofil von 250°C (Düse) 265°C/270°C/280°C und einer Zykluszeit von 15 Sekunden. Die Werkzeugtemperatur beträgt 30°C, es wird ein Kaltkanalwerkzeug, 12fach, mit Anspritzung über Tunnelanguß verwendet. Als Vorlauf werden zehn Schuß ä 25 g genommen. Das Produkt wird 15 h bei 50°C getrocknet.

| **Beispiel** | **Bestandteile** | **Gehalt [%]** |
|---|---|---|
| **Verdampferplättchen für Anwendung über mehrere Tage** | | |
| **6.1.** | Polymethylpenten | 92,9 |
| | Transfluthrin | 6,6 |
| | Butylhydroxytoluol | 0,5 |
| **6.2.** | Polymethylpenten | 91,2 |
| | Transfluthrin | 8,3 |
| | Butylhydroxytoluol | 0,5 |

| **Verdampferplättchen für Anwendung über eine Nacht** | | |
|---|---|---|
| **6.3.** | Polymethylpenten | 83,0 |
| | Polypropylen | 14,6 |
| | Transfluthrin | 1,32 |
| | Titandioxid | 1,0 |
| | Butylhydroxytoluol | 0,06 |
| | Farbstoff Sudan Blau 670 | 0,01 |
| **6.4.** | Polymethylpenten | 97,9 |
| | Transfluthrin | 2,0 |
| | Butylhydroxytoluol | 0,1 |

### Beispiel 7

### Wirkstoffabgabe der erfindungsgemäßen Formulierungen

Die Wirkstoffabgabe wird gravimetrisch bestimmt. Die ausgewogenen Testkörper werden auf die kalten Heizgeräte (handelsübliche FALP-Standard-Heizgeräte für Baygon-Verdarnpferplättchen) mittig aufgelegt und nach den jeweiligen Zyklen genau ausgewogen. Die Tests werden so lange durchgeführt, bis die Prüfkörper keinen Gewichtsverlust mehr zeigen.

Dimension der Prüfkörper: 34 mm x 23 mm x 2,5 mm.
Dauer der Zyklen: 8 h / Tag.

### Beispiel 7.1.

| **Abgaberaten der Formulierung aus Beispiel 6.1. über 7 Zyklen:** | | |
|---|---|---|
| **Dauer** **[h]** | **Zyklus** | **Abgabe** **[mg/h]** |
| 8 | 1 | 5,6875 |
| 16 | 2 | 2,2125 |
| 24 | 3 | 1,4125 |
| 32 | 4 | 1,0625 |
| 40 | 5 | 0,8 |
| 48 | 6 | 0,7 |
| 56 | 7 | 0,4375 |

### Beispiel 7.2

| **Abgaberaten der Formulierung aus Beispiel 6.2. über 7 Zyklen:** | | |
|---|---|---|
| **Dauer** **[h]** | **Zyklus** | **Abgabe** **[mg/h]** |
| 8 | 1 | 7,2 |
| 16 | 2 | 2,9375 |
| 24 | 3 | 2,0375 |
| 32 | 4 | 1,3125 |
| 40 | 5 | 1,1125 |
| 48 | 6 | 0,9125 |
| 56 | 7 | 0,5875 |

### Beispiel 7.3

| **Kumulierte Abgaberaten der Formulierung aus Beispiel 6.3. über einen Zyklus von 10 h:** | | | |
|---|---|---|---|
| **Dauer [h]** | **Test a** **(Abgabe in mg)** | **Test b** **(Abgabe in mg)** | **Durchschnitt** **(Abgabe in mg)** |
| 2 | 3,54 | 3,06 | 3,3 |
| 4 | 6,03 | 5,18 | 5,605 |
| 6 | 7,45 | 7 | 7,225 |
| 8 | 8,9 | 8,12 | 8,51 |
| 10 | 9,69 | 9,8 | 9,745 |

### Beispiel 7.4

| **Kumulierte Abgaberaten der Formulierung aus Beispiel 6.4. über einen Zyklus von 10 h:** | | | |
|---|---|---|---|
| **Dauer [h]** | **Test a** **(Abgabe in mg)** | **Test b** **(Abgabe in mg)** | **Durchschnitt** **(Abgabe in mg)** |
| 2 | 5,2 | 5,4 | 5,3 |
| 4 | 7,5 | 7,1 | 7,3 |
| 6 | 9,6 | 8,5 | 9,1 |
| 8 | 10,8 | 8,7 | 9,8 |
| 10 | 10,7 | 10,1 | 10,4 |

### Beispiel 8

### Prüfung von Verdampferplättchen und Langzeitverdampfern auf insektizide Wirkung gegen fliegende Insekten in 34 m³ Räumen

### MATERIAL UND METHODE

Die Prüfungen werden in Räumen mit folgenden Maßen durchgeführt:

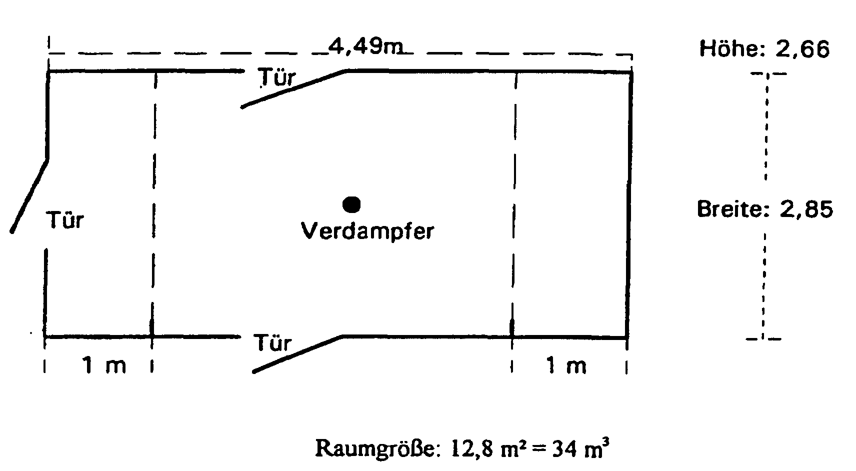

In den leerstehenden Räumen wird in die Mitte auf den Fußboden das jeweilige System gestellt. Bei Steckerversionen werden die Systeme an einem Stativ in einer Höhe von 30 cm befestigt. Einen Meter von den Schmalseiten entfernt, in einer Höhe von 2 m, sind Schnüre gespannt, an die Drahtkörbchen mit Testtieren gehängt werden. Die Türen sind geschlossen. Die Temperatur wird durch Heizkörper reguliert.

Morgens wird das jeweilige Verdampfersystem in Betrieb genommen und gleichzeitig 2 Drahtkörbchen mit je 20 Testtieren (3-4 Tage alt) in den Raum gehängt. Stündlich bis zu 8 Stunden werden weitere Tiere in den Raum gehängt und auf knock down-Wirkung in einem Rhythmus von 15 Minuten ausgewertet. Bestimmt werden die 50 % und 100 % knock down-Wirkung sowie Mortalität nach 24 Stunden. Das System wird bis zu 8 Stunden beheizt und danach abgestellt. Bei Langzeitverdampfern wird, über eine Zeitschaltuhr geregelt, täglich das System für 8 Stunden weiter betrieben.

### Testtiere:

- Stechmücken:: Aedes aegypti **mw,** sensibel
Culex quinquefasciatus **mw,** DDT-resistent

### Beispiel 8.1

| **Insektizide Wirkung von Verdampferplättchen aus Beispiel 6.1. und 6.2. gegen suszeptible Mücken der Spezies *Aëdes aegypti* in 34m**^{**3**}**-Räumen.** | | | | | | | | | |
|---|---|---|---|---|---|---|---|---|---|
| Raumtemperatur: 21-27°C | | | | | | | | | |
| Relative Luftfeuchte: 26-38% | | | | | | | | | |

| Test nach Tagen Zeit (Stunden) | Insekten exponiert nach Stunden | **Heizer: Falp Standard** 158°C **Plättchen aus Beispiel 6.1.** 6,6% Transfluthrin = 108 mg Wirkstoff | | | | **Heizer: Falp Standard** 158°C **Plättchen aus Beispiel 6.2.** 8,3% Transfluthrin = 136 mg Wirkstoff | | | |
|---|---|---|---|---|---|---|---|---|---|
| | | Kd-Wirkung in h und min | | kd nach 9h***** | % Mort. nach 24h***** | Kd-Wirkung in h und min | | kd nach 9h***** | % Mort. nach 24h* |
| | | 50% | 100% | | | 50% | 100% | | |
| 1. Tag | 0 | **14'** | 18' | 100 | 100 | 15' | 19' | 100 | 100 |
| | 1 | 2' | 3' | 100 | 100 | 2' | 3' | 100 | 100 |
| | 2 | 2' | 3' | 100 | 100 | 2' | 3' | 100 | 100 |
| | 3 | 2' | 3' | 100 | 100 | 2' | 3' | 100 | 100 |
| | 4 | 2' | 3' | 100 | 100 | 2' | 3' | 100 | 100 |
| | 5 | 2' | 3' | 100 | 100 | 2' | 3' | 100 | 100 |
| | 6 | 2' | 3' | 100 | 100 | 2' | 3' | 100 | 100 |
| | 7 | 2' | 3' | 100 | 100 | 2' | 3' | 100 | 100 |
| 8 h | 8 | 2' | 3' | 100 | 100 | 2' | 3' | 100 | 100 |
| 2. Tag | 0 | 22' | 36' | 100 | | 23' | 33' | 100 | |
| | 1 | 2' | 3' | 100 | | 2' | 3' | 100 | |
| | 2 | 2' | 3' | 100 | | 2' | 3' | 100 | |
| | 3 | 2' | 3' | 100 | | 2' | 3' | 100 | |
| | 4 | 2' | 3' | 100 | | 2' | 3' | 100 | |
| | 5 | 2' | 3' | 100 | | 2' | 3' | 100 | |
| | 6 | 2' | 4' | 100 | | 2' | 3' | 100 | |
| | 7 | 2' | 3' | 100 | | 2' | 3' | 100 | |
| 16 h | 8 | 2' | 3' | 100 | | 2' | 3' | 100 | |
| 5. Tag | 0 | 45' | 1h10' | 100 | 100 | 41' | 56' | 100 | 100 |
| | 1 | 5' | 16' | 100 | 100 | 6' | 18' | 100 | 100 |
| | 2 | 28' | 1h05' | 100 | 100 | 33' | 1h16' | 100 | 100 |
| | 3 | 35' | 1h09' | 100 | 100 | 32' | 1h11' | 100 | 100 |
| | 4 | 7' | 20' | 100 | 100 | 7' | 32' | 100 | 100 |
| | 5 | 5' | 16' | 100 | 100 | 5' | 18' | 100 | 100 |
| | 6 | 5' | 12' | 100 | 100 | 4' | 9' | 100 | 100 |
| | 7 | 5' | 9' | 100 | 100 | 5' | 7' | 100 | 100 |
| 40 h | 8 | 6' | 14' | 100 | 100 | 7' | 19' | 100 | 100 |
| 6. Tag | 0 | 1h30' | 2h13' | 100 | 100 | 1h14' | 1h44' | 100 | 100 |
| | 1 | 26' | 1h14' | 100 | 100 | 23' | 1h13' | 100 | 100 |
| | 2 | 59' | 1h24' | 100 | 100 | 11' | 27' | 100 | 100 |
| | 3 | 14' | 1h20' | 100 | 100 | 15' | 24' | 100 | 100 |
| | 4 | 35' | 1h15' | 100 | 100 | 26' | 42' | 100 | 100 |
| | 5 | 27' | 1h07' | 100 | 100 | 10' | 41' | 100 | 100 |
| | 6 | 42' | 1h14' | 100 | 100 | 11' | 21' | 100 | 100 |
| | 7 | 46' | >2h | 90 | 100 | 14' | 33' | 100 | 100 |
| 48 h | 8 | 40' | >1h | 63 | 100 | 8' | >1h | 98 | 100 |

| | | | | | | | | | |
|---|---|---|---|---|---|---|---|---|---|
| * kd/Mortalität nach Inbetriebnahme der Heizgeräte | | | | | | | | | |

### Beispiel 8.2.

| **Insektizide Wirkung von Verdampferplättchen aus Beispiel 6.1. und 6.2. gegen resistente Mücken der Spezies *Culex quinquefasciatus* in 34m**^{**3**}**-Räumen.** | | | | | | | | | |
|---|---|---|---|---|---|---|---|---|---|
| Raumtemperatur: 21-27°C | | | | | | | | | |
| Relative Luftfeuchte: 26-38% | | | | | | | | | |

| Test nach Tagen Zeit (Stunden) | Insekten exponiert nach Stunden | **Heizer: Falp Standard** 158°C **Plättchen aus Beispiel 6.1.** 6,6% Transfluthrin = 108 mg Wirkstoff | | | | **Heizer: Falp Standard** 158°C **Plättchen aus Beispiel 6.2.** 8,3% Transfluthrin = 136 mg Wirkstoff | | | |
|---|---|---|---|---|---|---|---|---|---|
| | | Kd-Wirkung in h und min | | % kd nach 9h***** | Mort. nach 24h* | Kd-Wirkung in h und min | | % kd nach 9h* | Mort. nach 24h* |
| | | 50% | 100% | | | 50% | 100% | | |
| 1. Tag | 0 | 32' | 43' | 100 | 100 | 34' | 53' | 100 | 100 |
| | 1 | 36' | 50' | 100 | 100 | 30' | 1h03' | 100 | 100 |
| | 2 | 25' | 44' | 100 | 100 | 29' | 53' | 100 | 100 |
| | 3 | 27' | 45' | 100 | 100 | 33' | 1h10' | 100 | 100 |
| | 4 | 29' | 59' | 100 | 100 | 31' | 1h03' | 100 | 100 |
| | 5 | 23' | 45' | 100 | 100 | 33' | 53' | 100 | 100 |
| | 6 | 39' | 1h08' | 100 | 100 | 30' | 53' | 100 | 100 |
| | 7 | 25' | 1h00' | 100 | 100 | 14' | 42' | 100 | 100 |
| 8 h | 8 | 24' | >1h | 80 | 100 | 22' | >1h | 90 | 100 |
| 2. Tag | 0 | 1h29' | 2h00' | 100 | | 1h22' | 1h42' | 100 | |
| | 1 | 2h25' | 3h00' | 100 | | 1h38' | 2h18' | 100 | |
| | 2 | 1h28' | 1h50' | 100 | | 1h35' | 2h34' | 100 | |
| | 3 | 1h17' | 2h28' | 100 | | 1h03' | 1h48' | 100 | |
| | 4 | 1h25' | 2h23' | 100 | | 1h05' | 1h57' | 100 | |
| | 5 | 57' | 1h48' | 100 | | 48' | 1h38' | 100 | |
| | 6 | 1h30' | >3h | 95 | | 1h12' | 2h05' | 100 | |
| | 7 | 1h13' | >2h | 80 | | 1h18' | >2h | 75 | |
| 16 h | 8 | >1h | >1h | 23 | | >1h | >1h | 30 | |
| 5. Tag | 0 | 6h25' | >9h | 93 | 100 | 5h38' | 7h13' | 100 | 100 |
| | 1 | 5h20' | >8h | 93 | 100 | 5h28' | 6h43' | 100 | 100 |
| | 2 | >7h | >7h | 38 | 90 | 4h15' | >7h | 98 | 100 |
| | 3 | >6h | >6h | 0 | 70 | 5h08' | >6h | 70 | 95 |
| | 4 | >5h | >5h | 0 | 70 | >5h | >5h | 10 | 85 |
| | 5 | >4h | >4h | 0 | 43 | >4h | >4h | 5 | 48 |
| | 6 | >3h | >3h | 0 | 20 | >3h | >3h | 0 | 45 |
| | 7 | >2h | >2h | 0 | 8 | >2h | >2h | 0 | 30 |
| **40 h** | 8 | >1h | >1h | 0 | 0 | >1h | >1h | 0 | 0 |
| 6. Tag | 0 | >9h | >9h | 0 | 28 | 5h53' | >9h | 83 | 95 |
| | 1 | >8h | >8h | 0 | 10 | 4h43' | >8h | 98 | 93 |
| | 2 | >7h | >7h | 0 | 0 | 3h28' | >7h | 93 | 93 |
| | 3 | >6h | >6h | 0 | 0 | >6h | >6h | 48 | 60 |
| | 4 | >5h | >5h | 0 | 0 | >5h | >5h | 20 | 28 |
| | 5 | >4h | >4h | 0 | 0 | >4h | >4h | 20 | 30 |
| | 6 | >3h | >3h | 0 | 0 | >3h | >3h | 5 | 23 |
| | 7 | >2h | >2h | 0 | 0 | >2h | >2h | 0 | 0 |
| 48 h | 8 | >1h | >1h | 0 | 0 | >1h | >1h | 0 | 0 |

| | | | | | | | | | |
|---|---|---|---|---|---|---|---|---|---|
| * kd/Mortalität nach Inbetriebnahme der Heizgeräte | | | | | | | | | |

### Beispiel 8.3

| **Insektizide Aktivität von Verdampferplättchen aus Beispiel 6.3. gegen suszeptible Mücken der Spezies *Aëdes aegypti* in 34m**^{**3**}**-Räumen** | | | | | |
|---|---|---|---|---|---|
| Temperatur : 22-25°C | | | | | |
| Relative Luftfeuchte: 15-31% (Mittelwerte aus 3 Versuchen) | | | | | |

| Test nach Stunden | **Falp Standard Heizer,** **Verdampferplättchen** **aus Beispiel 6.3** (1.32 % Transfluthrin) | | | | |
|---|---|---|---|---|---|
| | KD Wirkung in min/h | | | % Mortalität nach | |
| | 10% | 50% | 100% | 9h * | 24h ** |
| 0 | 23' | 27' | 34' | 100 | 100 |
| 1 | 1' | 2' | 4' | 100 | 100 |
| 2 | 1' | 2' | 3' | 100 | 100 |
| 3 | 1' | 2' | 4' | 100 | 100 |
| 4 | 1' | 2' | 4' | 100 | 100 |
| 5 | 1' | 2' | 4' | 100 | 100 |
| 6 | 1' | 2' | 5' | 100 | 100 |
| 7 | 1' | 2' | 4' | 100 | 100 |
| 8 | 1' | 2' | 4' | 100 | 100 |

| | | | | | |
|---|---|---|---|---|---|
| * 9 Stunden nach Inbetriebnahme der Heizgeräte | | | | | |
| ** 24 Stunden nach Inbetriebnahme der Heizegeräte | | | | | |

### Beispiel 8.4

| **Insektizide Aktivität von Verdampferplättchen aus Beispiel 6.3. gegen resistente Mücken der Spezies *Culex quinquefasciatus* in 34m**^{**3**}**-Räumen** | | | | | |
|---|---|---|---|---|---|
| Temperatur: 22-25°C | | | | | |
| Relative Luftfeuchte: 15-31% (Mittelwerte aus 3 Versuchen) | | | | | |

| Test nach Stunden | **Falp Standard Heizer, Verdampferplättchen** **aus Beispiel 6.3.** (1.32 % Transfluthrin) | | | | |
|---|---|---|---|---|---|
| | KD Wirkung in min/h | | | % Mortalität nach | |
| | 10% | 50% | 100% | 9h * | 24h ** |
| 0 | 1h46' | 2h36' | 3h44' | 100 | 100 |
| 1 | 1h10' | 1h58' | 3h28' | 100 | 100 |
| 2 | 1h01' | 1h48' | 3h38' | 100 | 100 |
| 3 | 1h20' | 2h36' | 4h36' | 100 | 100 |
| 4 | 1h12' | 2h18' | 3h40' | 100 | 100 |
| 5 | 1h08' | 2h00' | --- | 93 | 100 |
| 6 | 59' | >3h | --- | 83 | 100 |
| 7 | >2h | --- | --- | 44 | 77 |
| 8 | --- | --- | --- | 5 | 27 |

| | | | | | |
|---|---|---|---|---|---|
| * 9 Stunden nach Inbetriebnahme der Heizegeräte | | | | | |
| ** 24 Stunden nach Inbetriebnahme der Heizgeräte | | | | | |

### Beispiel 8.5

| **Insektizide Aktivität von Verdampferplättchen aus Beispiel 6.4. gegen suszeptible Mücken der Spezies *Aëdes aegypti* in 34m**^{**3**}**-Räumen** | | | | | |
|---|---|---|---|---|---|
| Temperatur: 22-26°C | | | | | |
| Relative Luftfeuchte: 34-45% (Mittelwerte aus 2 Versuchen) | | | | | |

| Test nach Stunden | **FALP-Standardheizer** **Verdampferplättchen aus Beispiel 6.4** (2 % Transfluthrin) | | | | |
|---|---|---|---|---|---|
| | KD Wirkung in min/h | | | % Mortalität nach | |
| | 10% | 50% | 100% | 9h | 24h |
| 0 | 20' | 27' | 31' | 100 | 100 |
| 1 | 1' | 2' | 3' | 100 | 100 |
| 2 | 1' | 2' | 3' | 100 | 100 |
| 3 | 1' | 2' | 3' | 100 | 100 |
| 4 | 1' | 2' | 3' | 100 | 100 |
| 5 | 1' | 2' | 3' | 100 | 100 |
| 6 | 1' | 2' | 4' | 100 | 100 |
| 7 | 1' | 2' | 5' | 100 | 100 |
| 8 | 3' | 5' | 8' | 100 | 100 |

### Beispiel 8.6

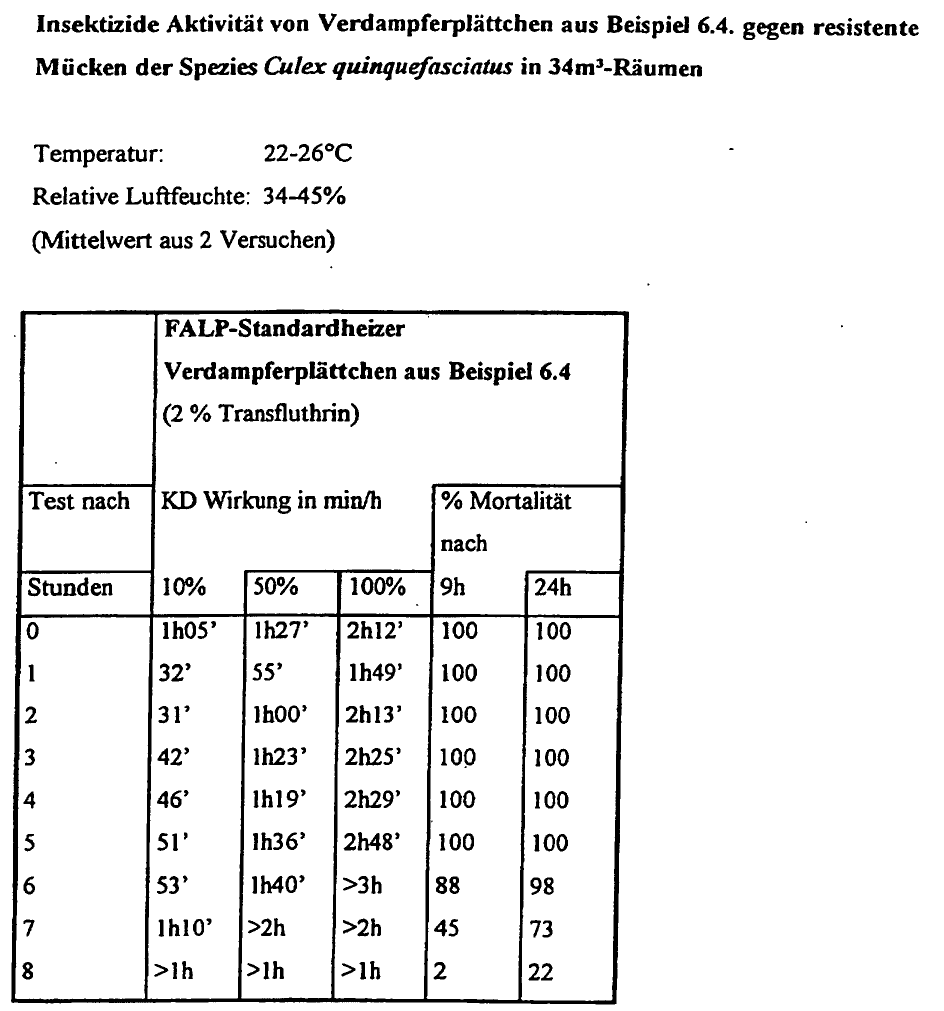

## Patentansprüche

1. Insektizid-enthaltende Formulierung, die umfasst
A) ein oder mehrere pyrethroide Insektizide, die bei erhöhter Temperatur abgegeben werden,
B) Poly-4-methylpenten, gegebenenfalls im Gemisch mit anderen Poly-α-olefinen mit einem Erweichungspunkt zwischen 100 und 300 °C und
C) einen oder mehrere Zuschlagstoffe.

2. Formulierung nach Anspruch 1, die als pyrethroides Insektizid enthält
3-Allyl-2-methyl-cyclopent-2-en-4-on-1-yl-d/l-cis/trans-chrysanthemat (Allethrin/Pynamin®),
3-Allyl-2-methyl-cyclopent-2-en-4-on-1-yl-d-cis/trans-chrysanthemat (Pynamin forte®),
3-Allyl-2-methyl-cyclopent-2-en-4-on-1-yl-d-trans-chrysanthemat (Bioallethrin®),
2,3,5,6-Tetrafluorobenzyl-(+)-1R-trans-2,2-dimethyl-3-(2,2-dichlorovinyl)-cyclopropancarboxylat (Transfluthrin, Bayothrin®)
oder Mischungen davon.

3. Formulierung nach Anspruch 1 oder 2, **dadurch gekennzeichnet, dass** sie als pyrethroides Insektizid 2,3,5,6-Tetrafluorobenzyl-( +)-1 R-trans-2,2-dimethyl-3-(2,2-dichlorovinyl)-cyclopropanecarboxylat (Transfluthrin, Bayothrin®) enthält

4. Formulierung nach einem der Ansprüche 1 bis 3, **dadurch gekennzeichnet, dass** sie zusätzlich zu Poly-4-methylpenten ein oder mehrere andere Poly-α-olefine aus der Gruppe der Polyethylene, Polypropylene, Polybutene und Polyisobutene sowie der Copolymerisate der den genannten Polymeren zugrunde liegenden α-Olefine enthält.

5. Formulierung nach einem der Ansprüche 1 bis 4, die als Zuschlagstoff Modifizierungsmittel und/oder Füll- und Verstärkungsmittel und/oder Verarbeitungshilfsmittel enthält.

6. Formulierung nach einem der Ansprüche 1 bis 5, worin Poly-4-methylpenten bis zur Hälfte seines Gewichtes durch ein anderes Poly-α-olefin ersetzt sein kann.

7. Insektizid-enthaltende Formulierung nach einem der Ansprüche 1 bis 6, die enthält
A) 0,1 bis 80 Gew.-% Transfluthrin,
B) 99,9 bis 20 Gew.-% Poly-4-methyl-1-penten, das bis zur Hälfte seines Gewichtes durch ein andere Poly-α-olefin ersetzt sein kann,
wobei sich die Prozentangaben jeweils auf die Summe der Komponenten A + B beziehen.

8. Verfahren zur Herstellung der Formulierung nach den Ansprüchen 1 bis 7, bei dem die Komponenten miteinander gemischt und die erhaltene Mischung geformt wird.

9. Verwendung der Formulierung nach den Ansprüchen 1 bis 7 zur Bekämpfung von Insekten.

## Claims

1. An insecticide-containing formulation comprising
A) one or more pyrethroid insecticides which are released at elevated temperatures,
B) poly-4-methylpentene, optionally in admixture with one or more other poly-α-olefins having a softening point between 100 and 300 °C and
C) one or more aggregates.

2. The formulation according to claim 1, containing as pyrethroid insecticide
3-allyl-2-methyl-cyclopent-2-en-4-on-1-yl-d/l-cis/trans-chrysanthemate (Allethrin/Pynamin®);
3-allyl-2-methyl-cyclopent-2-en-4-on-1-yl-d-cis/trans-chrysanthemate (Pynamin forte®);
3-allyl-2-methyl-cyclopent-2-en-4-on-1-yl-d-trans-chrysanthemate (Bioallethrin®);
2,3,6,6-tetrafluorobenzyl-(+)-1 R-trans-2,2-dimethyl-3-(2,2-dichlorovinyl)-cyclopropancarboxylate (Transfluthrin, Bayothrin®)
or mixtures thereof.

3. The formulation according to claim 1 or 2, containing as pyrethroid insecticide 2,3,5,6-tetrafluorobenzyl-(+)-1 R-trans-2,2-dimethyl-3-(2,2-dichlorovinyl)-cyclopropanecarboxylate (Transfluthrin, Bayothrin®).

4. The formulation according to any of claims 1 to 3 containing besides poly-4-methylpentene one or more other poly-α-olefins selected from the group of polyethylenes, polypropylenes, polybutenes and polyisobutenes as well as copolymerisates of the α-olefins constituting the above mentioned polymers.

5. The formulation according to any of claims 1 to 4 wherein the aggregates are modifiers and/or fillers and reinforcing materials and/or processing aids.

6. The formulation according to any of claims 1 to 5 wherein the poly-4-methylpentene up to half of its weight may be replaced by another poly-α-olefin.

7. The formulation according to any of claims 1 to 6 containing
A) from 0.1 to 80 % by weight of transfluthrin,
B) from 99.9 to 20 % by weight of poly-4-methyl-1-pentene, which in turn may be replaced up to half its weight by another poly-α-olefin,
the percentages being based in each case on the sum of components A and B.

8. A process for producing the formulation according any of claims 1 to 7 by mixing the components and shaping the resulting mixture.

9. Use of the formulations according to any of claims 1 to 7 for control of insects.

## Revendications

1. Formulation contenant des insecticides, qui comprend
(A) un ou plusieurs insecticides pyréthroïdes, qui sont délivrés à haute température,
(B) du poly-4-méthylpentène, éventuellement en mélange avec d'autres poly-α-oléfines ayant un point de ramollissement entre 100 et 300°C et
(C) un ou plusieurs additifs.

2. Formulation selon la revendication 1 qui contient comme insecticide pyréthroïde du d/l-cis/trans-chrysanthémate de 3-allyl-2-méthyl-cyclopent-2-én-4-on-1-yle (Alléthrine/Pynamine®),
du d-cis/trans-chrysanthémate de 3-allyl-2-méthyl-cyclopent-2-én-4-on-1-yle (Pynamine forte®),
du d-trans-chrysanthémate de 3-allyl-2-méthyl-cyclopent-2-én-4-on-1-yle (Bioalléthrine®),
du (+)-1R-trans-2,2-diméthyl-3-(2,2-dichlorovinyl)-cyclopropane-carboxylate de 2,3,5,6-tétrafluorobenzyle (Transfluthrine, Bayothrine®),
ou des mélanges de ceux-ci.

3. Formulation selon la revendication 1 ou 2 **caractérisée en ce qu'**elle contient comme insecticide pyréthroïde du (+)-1R-trans-2,2-diméthyl-3-(2,2-dichlorovinyl)-cyclopropanecarboxylate de 2,3,5,6-tétrafluorobenzyle (Transfluthrine, Bayothrine®).

4. Formulation selon l'une des revendications 1 à 3 **caractérisée en ce qu'**elle contient en plus du poly-4-méthylpentène une ou plusieurs autres poly-α-oléfines du groupe des polyéthylènes, des polypropylènes, des polybutènes et des polyisobutènes ainsi que des copolymères des α-oléfines qui sont à la base des polymères cités.

5. Formulation selon l'une des revendications 1 à 4 qui contient comme additif des agents modificateurs et/ou des charges et des agents de renforcement et/ou des adjuvants de traitement.

6. Formulation selon l'une des revendications 1 à 5 où le poly-4-méthylpentène peut être remplacé jusqu'à la moitié de son poids par une autre poly-α-oléfine.

7. Formulation contenant des insecticides selon l'une des revendications 1 à 6 qui contient
A) 0,1 à 80 % en poids de transfluthrine,
B) 99,9 à 20 % en poids de poly-4-méthyl-1-pentène, qui peut être remplacé jusqu'à la moitié de son poids par une autre poly-α-oléfine,
où les indications de pourcentages se rapportent dans chaque cas à la somme des composants A + B.

8. Procédé de préparation de la formulation selon les revendications 1 à 7 dans lequel les composants sont mélangés entre eux et le mélange obtenu est mis en forme.

9. Utilisation de la formulation selon les revendications 1 à 7 pour la lutte contre les insectes.
